(19) Europäisches Patentamt / European Patent Office / Office européen des brevets

(11) **EP 1 715 352 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(21) Anmeldenummer: **06006355.9**

(22) Anmeldetag: **28.03.2006**

(51) Int Cl.:
**G01R 23/20** (2006.01)    **G01M 17/00** (2006.01)
**F02D 41/22** (2006.01)    **F02D 41/14** (2006.01)
**G07C 5/08** (2006.01)    **G01D 5/00** (2006.01)

(54) **VERFAHREN UND VORRICHTUNG ZUR FEHLERDIAGNOSE MECHATRONISCHER SYSTEME**

METHOD AND APPARATUS FOR DIAGNOSING FAILURES IN A MECHATRONIC SYSTEM

MÉTHODE DE DIAGNOSTIC DE PANNES POUR UN SYSTÈME MÉCATRONIQUE

(84) Benannte Vertragsstaaten:
**AT BE BG CH CY CZ DK EE ES FI FR GB GR HU IE IS IT LI LT LU LV MC NL PL PT RO SE SI SK TR**

(30) Priorität: **21.04.2005 DE 102005018980**

(43) Veröffentlichungstag der Anmeldung:
**25.10.2006 Patentblatt 2006/43**

(73) Patentinhaber: IAV GmbH
**Ingenieurgesellschaft Auto und Verkehr**
**10587 Berlin (DE)**

(72) Erfinder:
- **Jeinsch, Torsten, Dr.-Ing.**
  **23996 Bad Kleinen (DE)**
- **Millich, Elmar, Dr. rer. nat.**
  **10999 Berlin (DE)**
- **Rabba, Heiko**
  **38116 Braunschweig (DE)**
- **Schultalbers, Matthias**
  **38536 Meinersen (DE)**
- **Dünow, Peter, Prof. Dr.-Ing.**
  **18196 Kavelstorf (DE)**
- **Ding, Steven X., Prof. Dr.-Ing.**
  **45894 Gelsenkirchen (DE)**
- **Weinhold, Nick Werner**
  **47918 Tönisvorst (DE)**
- **Zhang, Ping, Dr.-Ing.**
  **47057 Duisburg (DE)**

(56) Entgegenhaltungen:
- CAMPOS-DELGADO D U ET AL: "Integrated fault tolerant scheme with disturbance feedforward", AMERICAN CONTROL CONFERENCE, 2004. PROCEEDINGS OF THE 2004 BOSTON, MA, USA JUNE 30-JULY 2, 2004, PISCATAWAY, NJ, USA,IEEE, Bd. 2, 30. Juni 2004 (2004-06-30), Seiten 1799-1804, XP010763078, ISBN: 978-0-7803-8335-7
- NEMIN ZHOU ED - YIMING A ET AL: "A natural approach to high performance robust control: another look at Youla parameterization", SICE 2004 ANNUAL CONFERENCE, IEEE, PISCATAWAY, NJ, USA, Bd. 1, 4. August 2004 (2004-08-04), Seiten 869-874, XP010825316, ISBN: 978-4-907764-22-7
- DING S X ET AL: "Study on detecting multiplicative faults in linear dynamic systems", PROCEEDINGS OF THE 2003 AMERICAN CONTROL CONFERENCE. ACC. DENVER, CO, JUNE 4 - 6, 2003; [AMERICAN CONTROL CONFERENCE], NEW YORK, NY : IEEE, US, Bd. 2, 4. Juni 2003 (2003-06-04), Seiten 1776-1781, XP010664247, DOI: 10.1109/ACC.2003.1239852 ISBN: 978-0-7803-7896-4
- R. ISERMANN: "Model base fault detection and diagnosis methods", PROCEEDINGS OF 1995 AMERICAN CONTROL CONFERENCE, ACC'95, Bd. 3, 1. Januar 1995 (1995-01-01), Seiten 1605-1609, XP055004935, DOI: 10.1109/ACC.1995.529778 ISBN: 978-0-78-032445-9
- PATTON R J ET AL: "Robustness in quantitative model-based fault diagnosis", 19920101, 1. Januar 1992 (1992-01-01), Seiten 4/1-417, XP006522205,

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(Forts. nächste Seite)

- DING S X ET AL: "Fault detection system design based on a new trade-off strategy", DECISION AND CONTROL, 2000. PROCEEDINGS OF THE 39TH IEEE CONFERENCE ON DEC. 12-15, 2000, PISCATAWAY, NJ, USA,IEEE, PISCATAWAY, NJ, USA, Bd. 4, 12. Dezember 2000 (2000-12-12), Seiten 4144-4149, XP010536710, ISBN: 978-0-7803-6638-1
- T. JEINSCH ET AL: "A robust model-based information system for monitoring and fault detection of large scale belt conveyor systems", PROCEEDINGS OF THE 4TH WORLD CONGRESS ON INTELLIGENT CONTROL AND AUTOMATION (CAT. NO.02EX527), Bd. 4, 1. Januar 2002 (2002-01-01), Seiten 3283-3287, XP055005194, DOI: 10.1109/WCICA.2002.1020141 ISBN: 978-0-78-037268-9
- SELIGER R ET AL: "Fault-diagnosis by disturbance decoupled nonlinear observers", PROCEEDINGS OF THE CONFERENCE ON DECISION AND CONTROL. BRIGHTON, DEC. 11 - 13, 1991; [PROCEEDINGS OF THE CONFERENCE ON DECISION AND CONTROL], NEW YORK, IEEE, US, Bd. CONF. 30, 11. Dezember 1991 (1991-12-11), Seiten 2248-2253, XP010055871, DOI: 10.1109/CDC.1991.261547 ISBN: 978-0-7803-0450-5
- INAGAKI H ET AL: "An adaptive fuel injection control with internal model in automotive engines", SIGNAL PROCESSING AND SYSTEM CONTROL, FACTORY AUTOMATION. PACIFIC GROVE, NOV. 27 - 30, 1990; [PROCEEDINGS OF THE ANNUAL CONFERENCE OF THE INDUSTRIAL ELECTRONICS SOCIETY. (IECON)], NEW YORK, IEEE, US, Bd. CONF. 16, 27. November 1990 (1990-11-27), Seiten 78-83, XP010038111, DOI: 10.1109/IECON.1990.149114 ISBN: 978-0-87942-600-2

**Beschreibung**

Die Erfindung betrifft ein Verfahren und eine Vorrichtung zur Fehlerdiagnose mechatronischer Systeme, wobei auf Basis der Analyse vorhandener Regelungsstrukturen Residuensignale aus den Regelungsstrukturen gewonnen werden und eine Fehleranalyse, Fehlerparametrierung und Fehlerselektion erfolgt.

Mit der Entwicklung hin zu komplexen mechatronischen Systemen, wie z. B. Motormanagementsystemen, ESP, Robotersystemen usw. werden immer mehr leistungsfähige Sensoren, Aktuatoren und Mikroprozessoren, auf denen Regelalgorithmen implementiert werden, in diese mechatronischen Systeme eingebettet. Sie bilden in geeigneten Systemstrukturen Regelkreise, welche einzelne Komponenten und Teilsysteme so ansteuern, dass das gesamte Systemverhalten den gestellten Leistungsanforderungen entspricht. Mechatronische Systeme werden oft dort eingesetzt, wo hohe Anforderungen an Systemzuverlässigkeit und - verfügbarkeit gestellt werden. Mit dem stetig wachsenden Integrationsgrad in mechatronischen Systemen hat die Softwareredundanz gestützte Fehlerdiagnose in den vergangenen Jahren, zunächst als eine alternative Lösung zu der auf Hardwareredundanz basierenden Technologie betrachtet, stark an Bedeutung gewonnen. Die Integration softwaregestützter Fehlerdiagnosesysteme in z. B. ESP, Robotersteuerungssysteme oder in Motorsteuerungssysteme kennzeichnet eine signifikante Leistungssteigerung in der Systemzuverlässigkeit und -verfügbarkeit dieser Systeme.

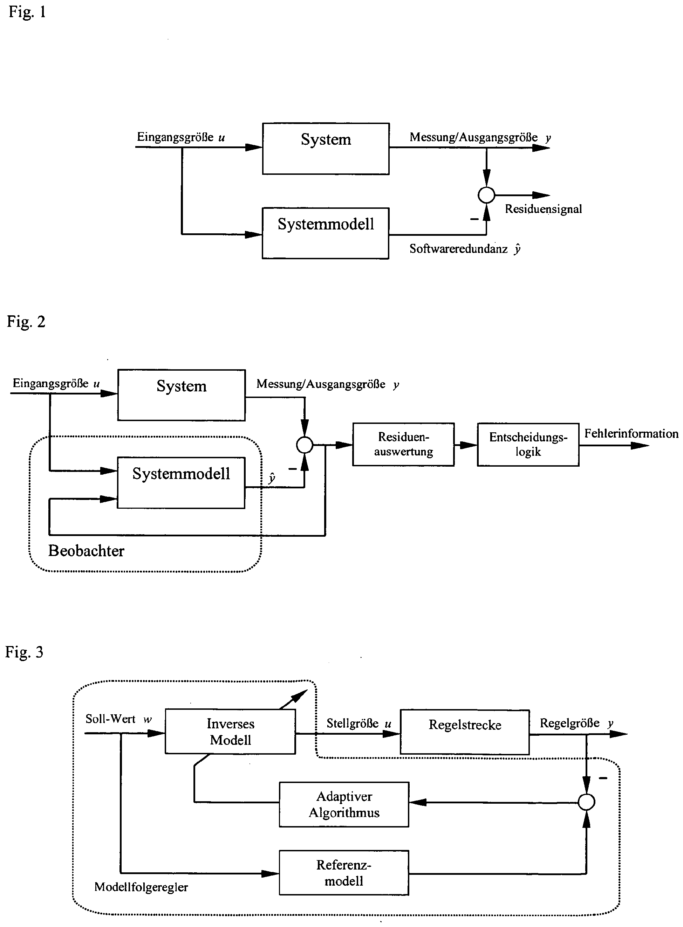

Unter einer Vielzahl von Softwareredundanzgestützten Fehlerdiagnosemethoden erweisen sich die modellgestützten Methoden für den Einsatz in mechatronischen Systemen als besonders geeignet. Der erfolgreiche Einsatz modellgestützter Fehlerdiagnosemethoden in mechatronischen Systemen ist im Wesentlichen darauf zurückzuführen, dass sich mechanische Systeme anhand der Kraft-, Moment- und Energiebilanzen mathematisch gut modellieren lassen. Mit den aufgestellten Modellen kann, wie nachfolgend in Fig. 1 gezeigt, die so genannte Softwareredundanz und damit die Residuensignale anhand eines Vergleichs zwischen den gemessenen Systemgrößen und deren Redundanz generiert werden. Ein Beispiel einer Fehlerdetektion aus dem Bereich der Fahrzeugsteuerungen ist in der DE 197 50 191 A1 beschrieben. Dargestellt ist die Fehlererkennung bei einer Lasterfassung, wobei das Luftmassignal eines Luftmassenmessers mit dem aus einem Saugrohrmodell gewonnenen Luftmassensignal, welches aus dem Saugrohrdruck und dem Umgebungsdruck sowie der Drosselklappenstellung gewonnen wird, verglichen wird. Es erfolgt eine Auswertung auf einen definierten Schwellwert und bei dessen Überschreitung wird ein Fehler in der Lasterfassung erkannt. Des Weiteren kann eine Fehlerseparierung erfolgen. Es werden dazu zusätzliche Signale, beispielsweise die Überwachung der Messwerte von beiden Drosselklappenpotentiometern zueinander benötigt. Ein weiteres zur Fehlerseparierung genutztes Signal ist die Gemischadaption auf Basis der Lambdaregelung.

Vorbekannt ist aus der DE 100 21 639 C1 ein Verfahren zur Diagnose des Saugrohrdrucksensors und des Umgebungsdrucksensors. Es werden beim Start die Werte des Saugrohrdruckes mit den Werten des Umgebungsdrucksensors verglichen. Bei einer Abweichung der Signale erfolgt im ungedrosselten Betrieb eine Überprüfung, welcher der Sensoren fehlerhaft ist. Dazu wird ein weiteres, aus der Messung der Luftmasse gewonnenes, modelliertes Saugrohrdrucksignal im ungedrosselten Betrieb ermittelt. Bei dem vorgeschlagenen Verfahren wird das gemessene Luftmassensignal als fehlerfrei vorausgesetzt.

Bei beiden Verfahren erfolgt ein Abgleich von zwei Messgrößen zueinander, wobei auf Basis eines Modells eine Messgröße in die andere umgerechnet wird und auf Basis der Differenz und nachfolgender weiterer Messwerte eine Fehleranalyse erfolgt.

Gemäß D. U. Campos-Delgado, S. M. Martinez and K. Zhou, "Integrated fault tolerant scheme with disturbance feedforward," Proceedings of the 2004 American Control Conference, Boston, MA, USA, 2004, pp. 1799-1804 vol.2 ist ein Verfahren zur Fehlerdiagnose eines geregelten mechatronischen Systems Stand der Technik, dessen Regelungsstrukturen wenigstens eine Modellfolgeregelung aufweisen, wobei zur Fehlerdiagnose die in das Regelungssystem eingebettete Modellfolgeregelung betrachtet wird und die Fehlerdiagnose auf Basis wenigstens eines Schätzwertes erfolgt, der aus dem in der Modellfolgeregelung enthaltenen Modell der Regelstrecke abgeleitet wird.

Gemäß K. Zhou, "A natural approach to high performance robust control: another look at Youla parameterization," SICE 2004 Annual Conference, Sapporo, 2004, pp. 869-874 vol. 1 ist weiterhin eine Fehlerdiagnose Stand der Technik, die auf dem Unterschied zwischen dem Ist-Wert einer Regelgröße und der Schätzung einer Führungsgröße basiert.

Der Erfindung liegt die Aufgabe zugrunde, ein Verfahren und eine Vorrichtung zur Fehlerdiagnose zu schaffen, wobei einzelne Fehler auf Basis der bekannten Regelungsstruktur detektierbar und parametrierbar sind.

Diese Aufgabe wird erfindungsgemäß durch die jeweils kennzeichnenden Merkmale der jeweiligen Patentansprüche gelöst.

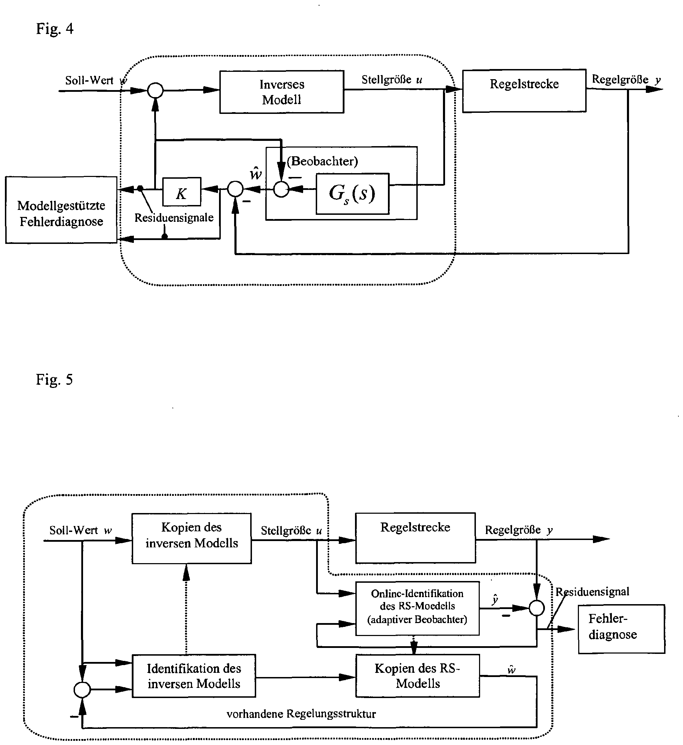

Weitere Einzelheiten der Erfindung werden in dem Ausführungsbeispiel der Abbildung 4 beschrieben.

Hierbei zeigen:

Figur 1    eine typische Systemdarstellung mit Fehlerdiagnose gemäß dem Stand der Technik,
Figur 2    eine Systemdarstellung mit beobachtergestützter Fehlerdiagnose,

Figur 3    eine Systemdarstellung der Modellfolgeregelung,

Figur 4    eine Systemdarstellung der Fehlerdiagnose in einer Beobachter gestützten Modellfolgeregelungsstruktur,

Figur 5    Struktur einer adaptiven Modellfolgeregelung mit Residuengenerierung,

Figur 6    Struktur einer Modellfolgeregelung mit Neuronalem Netz,

Figur 7    Struktur einer Trainingsroutine für das inverse Modell,

Figur 8    Struktur einer nichtlinearen Modellfolgeregelung mit Fehlerdiagnose.

Figuren 1-3 und 5-8 sind nicht Teil der beanspruchten Erfindung. Figur 1 zeigt eine typische Systemdarstellung für eine Fehlerdiagnose nach dem Stand der Technik mit einem parallel zum System angeordneten Systemmodell (Softwareredundanz), wobei aus der Abweichung der Ausgangsgröße (Ist-Wert der Regelgröße) y und dem Schätzwert $\hat{y}$ für diese Größe ein Residuensignal gewonnen wird.

Das in Figur 2 skizzierte Blockschaltbild stellt die Grundstruktur eines Beobachter gestützten Fehlerdiagnosesystems dar. Parallel zum System wird ein Beobachter mit einem Systemmodell angeordnet, welchem die Eingangsgröße sowie die Differenz zwischen den Ausgangsgrößen des realen Systems (Ist-Wert der Regelgröße) y und dem Schätzwert für diese Größe $\hat{y}$, die auf dem Systemmodell basiert, am Eingang anliegen. Die Residuenbildung zur Fehlerdiagnose erfolgt aus der Differenz $(y - \hat{y})$, wobei in nachfolgenden Verfahrensschritten eine Residuenauswertung und eine Entscheidungslogik die Fehlerbestimmung ermöglicht. Es ist Stand der Technik, dass das Systemmodell als Kern des in Figur 2 dargestellten Fehlerdiagnosesystems in Softwareform auf einem Mikroprozessor implementiert wird und parallel zum Systembetrieb läuft. Die Aufstellung, programmiertechnische Umsetzung und Implementierung des Systemmodells erfordern eine möglichst genaue mathematische Modellbildung des Systems sowie im Betrieb des Systems eine ausreichende (Online/On Board) Rechenkapazität sowie Speicherplatz. Die modellgestützte Residuengenierung ist daher oft aufgrund der hohen Komplexität mechatronischer Systeme mit hohem Aufwand sowie hohem Anspruch an Rechentechnik und damit hohen Kosten verbunden.

Für mechatronische Systeme ist der modellgestützte Reglerentwurf ein weit verbreitetes Verfahren. Insbesondere werden in vielen Anwendungen Systemmodelle bzw. inverse Modelle des Systems zur Optimierung des Systemverhaltens und zur geeigneten Anpassung (adaptiv) an sich ständig verändernde Umgebungsbedingungen voll oder in einer vereinfachten Form in Regelkreise und damit in mechatronische Systeme integriert. Ein oft in diesen Systemen verwendetes Regelungskonzept ist die so genannte Modellfolgeregelung, deren Struktur in Figur 3 schematisch dargestellt ist.

Figur 3 zeigt die schematische Darstellung einer Modellfolgeregelung. Kern dieses Regelungskonzeptes ist, dass die Stellgröße u basierend auf dem Soll-Wert w durch ein inverses Modell der Regelstrecke gebildet wird. Ein Algorithmus adaptiert dabei die Parameter des inversen Modells anhand des Vergleichs des Ist-Wertes der Regelgröße y zum Schätzwert dieser Größe, welche aus dem Referenzmodell gebildet wird. Modellfolgeregelungen enthalten dabei immer ein in die Reglerstruktur eingebettetes Streckenmodell. Dieses Strukturmerkmal macht sich das erfindungsgemäße Diagnoseverfahren zunutze. Residuensignale werden direkt aus den in einem mechatronischen System eingebetteten Regelungsstrukturen entnommen, ohne zusätzlichen Aufwand zur Bildung eines Parallelmodells und vor allem ohne zusätzliche Online-Berechnungen zu veranlassen. Das Fehlerdiagnoseverfahren basiert auf den eingebetteten Modellfolgeregelungsstrukturen, woraus Fehlermodelle der Residuensignale aufgestellt werden, um die Schwellwerte und Fehlerisolationsmodelle zu parametrisieren und ferner optimal einzustellen. Das erfindungsgemäße Verfahren geht von der in Abb. 3 dargestellten Modellfolgeregelungsstruktur aus und umfasst beispielhaft die nachfolgend dargestellten vier verschiedenen Varianten.

Figur 4 zeigt eine Variante der Modellfolgeregelung, die aufgrund ihrer einfachen Struktur und ihres geringen Echtzeitrechenaufwands oft in der Praxis zu finden ist. Die Regelstrecke wird von einer Stellgröße u geregelt, wobei an deren Ausgang der Ist-Wert der Regelgröße y messbar ist. Gemäß der Modellfolgeregelstruktur ist die Stellgröße Ausgangsgröße eines inversen Modells der Regelstrecke. Von der Stellgröße u wird ein Modell der Regelstrecke Gs(s) beaufschlagt, wobei an dessen Ausgang die um den Faktor K verstärkte Differenz aus Führungsgrößenschätzung und Regelgröße $\hat{w}$-y subtrahiert wird. Diese Struktur kennzeichnet eine klassische Beobachterstruktur, mit Hilfe derer eine Nachbildung der Führungsgröße $\hat{w}$ (Führungsgrößenschätzung) erreicht werden kann.

Die Regelung basiert auf einem Vergleich zwischen dem (gemessenen) Ist-Wert der Regelgröße $y$ und der (Online-)Berechnung bzw. Schätzung der Führungsgröße $\hat{w}$ aus dem Modell der Regelstrecke. Die Abweichung des Ist-Wertes der Regelgröße y von der Führungsgröße w wird durch eine Korrektur an $\hat{w}$ über einen "Regler" $K(s)$, angetrieben von der Abweichung $\hat{w}$-y, ausgeglichen.

Um das Arbeitsprinzip des Reglers zu verdeutlichen, wird angenommen, dass die Regelstrecke bzw. das entsprechende inverse Modell durch Übertragungsfunktionen $G_s(s)$ bzw. $G_s^-(s)$ modelliert werden kann und dass sich der gesamte Regelkreis durch

$$y(s) = G_s(s)u(s)$$

$$u(s) = G_S^-(s)(w(s) + K(s)(\hat{w}(s) - y(s)))$$

$$\hat{w}(s) = G_s(s)u(s) - K(s)(\hat{w}(s) - y(s))$$

darstellen lässt. Somit gelten

$$\hat{w}(s) = \frac{G_s(s)u(s) + K(s)y(s)}{1 + K(s)}$$

$$u(s) = \frac{1 + K(s)}{1 + K(s) - K(s)G_s(s)G_s^-(s)} G_s^-(s)\left(w(s) - \frac{K(s)}{1 + K(s)}y(s)\right)$$

$$y(s) = \frac{1 + K(s)}{1 + K(s) - K(s)G_s(s)G_s^-(s)} G_s(s)G_s^-(s)(w(s) + K(s)(w(s) - y(s)))$$
$$:= I(s)w(s) + I(s)K(s)(w(s) - y(s))$$

$$I(s) = \frac{1 + K(s)}{1 + K(s) - K(s)G_s(s)G_s^-(s)} G_s(s)G_s^-(s) \approx 1$$

Bei einer geeigneten Wahl des "Reglers" $K(s)$ kann man trotz der vorhandenen Modellungenauigkeiten (vor allem bei inversen Modellen) neben der Systemstabilität ein gutes Führungs- und Störverhalten erzielen.

Wie bereits dargestellt wird ein Residuensignal z. B. mit Hilfe eines Beobachters generiert. Die Berechnung der Schätzung

$$\hat{w}(s) = G_S(s)u(s) - K(s)(\hat{w}(s) - y(s))$$

ist im Grunde ein Ausgangsbeobachter. Somit bildet die Schätzabweichung $\hat{w}(s)-y(s)$ sowie $K(s)(\hat{w}(s)-y(s))$ Residuensignale, welche sich in der Form

$$\hat{w}(s) - y(s) = \frac{G_s(s)u(s) - y(s)}{1 + K(s)} \quad \text{bzw.} \quad K(s)(\hat{w}(s) - y(s)) = \frac{K(s)}{1 + K(s)}\left(G_s(s)u(s) - y(s)\right)$$

darstellen lassen.

Es ist anzumerken, dass die Stellgröße $u$ und die Ausgangsgröße $y$ der Sollwertschätzung

$$\hat{w}(s) = G_S(s)u(s) - K(s)(\hat{w}(s) - y(s))$$

zugeführt werden. Diese in der Literatur als "open-loop" bezeichnete Residuengenerierungsstruktur gewährleistet hohe Empfindlichkeit für die zu entdeckenden Fehler und ist von der Eigenschaft der Modellfolgeregelung unabhängig.

Das Residuensignal $\hat{w}(s)$-$y(s)$ bzw. $K(s)(\hat{w}(s)$-$y(s))$ enthält die zur Entdeckung von Sensor-, Komponenten- und Aktuatorfehlern erforderlichen Informationen. Um diese Aussage zu verdeutlichen, wird angenommen, dass sich der fehlerhafte Prozess durch

$$y(s) = G_S(s)u(s) + \Delta G_S(s)u(s) + f_S(s) + G_K(s)f_K(s)$$

darstellen lässt, wobei mit $\Delta G_S(s), f_s(s), f_k(s)$ die Modellungenauigkeiten, Sensorfehler und Komponenten- bzw. Aktuatorfehler bezeichnet werden. Es führt dann zu

$$\hat{w}(s) - y(s) = \frac{1}{1+K(s)}\left[G_S(s)u(s) - y(s)\right] = \frac{-1}{1+K(s)}\left[\Delta G_S(s)u(s) + f_S(s) + G_K(s)f_K(s)\right]$$

Die obigen Gleichungen beschreiben die Dynamik der Residuensignale im Zusammenhang mit den möglichen Fehlern in Sensoren, Aktuatoren und Systemen und werden als Fehlermodell bezeichnet. Basierend auf diesen Fehlermodellen kann man die Schwellwerte anhand des verwendeten Reglers parametrisieren.

Die Schwellwerte sind sowohl im dynamischen Bereich, z. B. anhand der Definitionen

$$Sch_{dw} = \max_t \left| L^{-1}\left(\frac{1}{1+K(s)}\Delta G_S(s)u(s)\right)\right|$$

für das Residuum $\hat{w}(s)$-$y(s)$ bzw.

$$Sch_{ds} = \max_t \left| L^{-1}\left(\frac{K(s)}{1+K(s)}\Delta G_S(s)u(s)\right)\right|$$

für das Residuum $K(s)\,(\hat{w}(s)$-$y(s))$ , wobei $L^{-1}$ für die inverse Laplace-Transformierte steht, als auch im stationären Bereich, unter der Annahme der quasi konstanten Stellgröße u, d.h. $u(s) = \dfrac{K_u}{s}$, anhand von s

$$Sch_{dw} = \max \lim_{s\to 0}\left|\frac{1}{1+K(s)}\Delta G_S(s)K_u\right|$$

für das Residuum $\hat{w}(s)$-$y(s)$ bzw.

$$Sch_{ds} = \max \lim_{s\to 0}\left|\frac{K(s)}{1+K(s)}\Delta G_S(s)K_u\right|$$

für das Residuum $K(s)(\hat{w}(s)$-$y(s))$ einstellbar, wobei diese Schwellwerte durch ihre Abhängigkeit von der Stellgröße sogenannte adaptive Schwellwerte bilden. Die Schwellwerte basieren also auf den Übertragungsfunktionen der Modellungenauigkeiten auf die Residuen und sind als Obergrenze des maximalen Einflusses der Störung $\Delta G_S$ (Modellungenauigkeit) auf das jeweilige Residuum definiert.

Die möglichen Fehler sind weiterhin durch den Einsatz von Nachfiltern, z. B. durch die Nachfilter mit den Übertragungsfunktionen $R_1(s)$, $R_2(s)$ im Falle des Residuums $\hat{w}(s)$-$y(s)$, wobei $R_1(s)$ so zu wählen ist, dass

$$R_1(s)\frac{G_K(s)}{1+K(s)} << \frac{R_1(s)}{1+K(s)} \qquad\qquad R_1(s)(\hat{w}(s)-y(s)) \approx \frac{R_1(s)}{1+K(s)}\left[\Delta G_S(s)u(s)+f_S(s)\right]$$

und damit gilt, wodurch über den Zusammenhang $|R_1(s)(\hat{w}(s)-y(s))| > Sch_{dw}$ auf einen Fehler $f_S(s)$ geschlossen werden kann, bzw. $R_2(s)$

$$\frac{R_2(s)}{1+K(s)} << \frac{R_2(s)G_K(s)}{1+K(s)}$$

so zu wählen ist, dass und damit

$$R_2(s)(\hat{w}(s)-y(s)) \approx \frac{R_2(s)}{1+K(s)}\left[\Delta G_S(s)u(s)+G_K(s)f_K(s)\right]$$

gilt, wodurch über den Zusammenhang $|R_2(s)(\hat{w}(s)-y(s))| > Sch_{dw}$ auf einen Fehler $f_K(s)$ geschlossen werden kann und damit eine Lokalisierung, d. h. eine Bestimmung der Fehlerquelle, sichergestellt ist.

Weiterhin kann der aufgetretene und lokalisierte Fehler identifiziert, d. h. seine Größe über die Zusammenhänge

$$\hat{f}_S = \left[\lim_{s\to 0}\frac{-K(s)}{1+K(s)}\right]^{-1},$$

$$\hat{f}_K = \left[\lim_{s\to 0}\frac{-K(s)G_K(s)}{1+K(s)}\right]^{-1}$$

bzw. abgeschätzt werden. Mit $\hat{f}_S$ bzw. $\hat{f}_K$ liegt dann zusätzlich eine Fehlergrößenschätzung für den Sensor- bzw. Aktuator- bzw. Komponentenfehler vor. Gleiches Vorgehen führt zu zwei weiteren Nachfiltern und vergleichbaren Ergebnissen im Falle der Betrachtung des Residuums $K(s)(\hat{w}(s)-y(s))$.

In Figur 5 ist die Struktur einer adaptiven Modellfolgeregelung schematisch dargestellt.

Entsprechend dem Grundprinzip der Modellfolgeregelung erfolgt die Bildung der Stellgröße u aus dem Soll-Wert w durch ein inverses Modell. Die Stellgröße u regelt weiterhin die Regelstrecke, an deren Ausgang der Ist-Wert der Regelgröße y messbar ist. Es erfolgt eine Schätzung der Regelgröße $\hat{y}$ durch eine Online-Identifikation des Regelstreckenmodells. Eingang der Identifikation ist die Stellgröße u sowie die Differenz vom Ist-Wert der Regelgröße y und Schätzung der Regelgröße $\hat{y}$, mit welcher die Abweichung des Modells bewertet wird. Es können dabei im Stand der Technik bekannte Identifikationsverfahren, wie z. B. Parameterschätzverfahren oder die so genannten Subspace-Verfahren verwendet werden. Das so gebildete Regelstreckenmodell dient in einem weiteren Adaptionszweig zur Identifikation des inversen Modells, welches zur Bildung der Stellgröße genutzt wird. Die Identifikation des inversen Modells erfolgt dabei anhand der Abweichung des Soll-Wertes w zu dem aus dem Modellzweig Identifikation des inversen Modells und der Kopie des Regelstreckenmodells gebildeten Schätzung des Soll-Wertes $\hat{w}$.

Um das Regelungskonzept zu verdeutlichen, wird die Regelstrecke durch

$$y(s) = G_S(s,\theta)u(s)$$

modelliert, wobei $\theta$ den (unbekannten) Parametervektor des Modells bezeichnet. Die Online-Identifikation der Modellparameter wird kombiniert mit der Schätzung der Ausgangsgröße y durchgeführt. Dieser Vorgang lässt sich schematisch durch

$$\begin{bmatrix}\hat{y}\\\hat{\theta}\end{bmatrix} = \Psi\left(u, y - G_S u\right)$$

beschreiben, wobei $\Psi(u,y-\hat{y})$ eine Abbildung, also einen allgemeinen (mathematischen) Zusammenhang zwischen Stellgröße, Regelgröße und Systemparametern beschreibt. Dieser könnte beispielsweise eine klassische lineare oder nichtlineare Beobachterstruktur sein.

$\hat{\theta}$ kennzeichnet die aktuelle Schätzung des Parametervektors. Die Adaption des Parametervektors $\vartheta$ des inversen Modells erfolgt durch

$$\begin{bmatrix} \hat{w} \\ \hat{\vartheta} \end{bmatrix} = \Xi\left(w, w - G_s^- G_s\left(\hat{\theta}\right)w\right)$$

Mit einer Identifikation der Modellparameter kann man dann davon ausgehen, dass

$$G_s^-\left(s,\hat{\vartheta}\right)G_s(s,\theta) \approx I$$

und somit das Ziel der Modellfolgeregelung

$$y(s) = G_s(s,\theta)u(s) = G_s(s,\theta)G_s^-\left(s,\hat{\vartheta}\right)w(s) \approx w(s)$$

erreicht wird.

Die Residuengenerierung erfolgt durch die Nutzung des Signals $y\text{-}\hat{y}$. Da die Bildung der Schätzung von $y$ auf der Nutzung der Stellgröße $u$ basiert, wird das Residuensignal im Kontext einer "open-loop"-Struktur generiert. Dennoch wird das Residuensignal indirekt durch die Führungsgröße über die Identifikation des inversen Modells beeinflusst.

Wird nun angenommen, dass

$$y(s) = G_s(s,\theta)u(s) + f_s(s) + G_K(s)f_K(s)$$

ist, so gilt

$$y - \hat{y} = \left(G_s(s,\theta) - G_s\left(s,\hat{\theta}\right)\right)u(s) + f_s(s) + G_K(s)f_K(s),$$

wodurch die Dynamik des zuvor definierten Residuums beschrieben wird und die sogenannten Fehlermodelle definiert sind. Der Schwellwert ist sowohl im dynamischen Bereich, z. B. anhand der Definitionen

$$Sch_{dy} = \max_t \left| L^{-1}\left(\Delta G_s(s,\alpha,\beta,\gamma)u(s)\right) \right|$$

, wobei $L^{-1}$ für die inverse Laplace-Transformierte steht, als auch im stationären Bereich, unter der Annahme der quasi

$$u(s) = \frac{K_u}{s},$$

konstanten Stellgröße u, d. h.                anhand von

$$Sch_{dy} = \max \lim_{s\to 0} \left| \Delta G_s(s,\alpha,\beta,\gamma)K_u \right|$$

einstellbar und kennzeichnet den maximalen Einfluss der Störung (Modellungenauigkeit) auf das Residuumsignal. Der Schwellwert wird durch seine Abhängigkeit von den Parameterungenauigkeiten auch als adaptiver Schwellwert bezeichnet.

Die möglichen Fehler sind weiterhin durch den Einsatz von Nachfiltern, z. B. durch die Nachfilter mit den Übertragungsfunktionen $R_1(s)$, $R_2(s)$, wobei $R_1(s)$ so zu wählen ist, dass $R_1(s)G_K(s) \ll R_1(s)f_s(s)$ und damit $R_1(s)(y(s)\text{-}\hat{y}(s)) \approx R_1(s)[\Delta G_s(s,\alpha,\beta,\gamma)u(s) + f_s(s)]$ gilt, wodurch über den Zusammenhang $|R_1(s)(y(s)\text{-}\hat{y}(s))| > Sch_{dy}$ auf einen

Fehler $f_s(s)$ geschlossen werden kann, bzw. $R_2(s)$ so zu wählen ist, dass $R_2(s)f_s(s)<<R_2(s)G_K(s)$ und damit $R_2(s)(y(s)-\hat{y}(s)) \approx R_2(s)[\Delta G_s(s,\alpha,\beta,\gamma)u(s)+G_K(s)+f_K(s)]$ gilt, wodurch über den Zusammenhang $|R_2(s)(y(s)-\hat{y}(s))|>Sch_{dy}$ auf einen Fehler $f_K(s)$ geschlossen werden kann und damit eine Lokalisierung, d. h. eine Bestimmung der Fehlerquelle, sichergestellt ist.

Weiterhin kann der aufgetretene und lokalisierte Fehler identifiziert, d. h. seine Größe über die Zusammenhänge

$$\hat{f}_S = \lim_{s \to 0}(y(s) - \hat{y}(s)) \qquad \qquad \hat{f}_K = \lim_{s \to 0}\left[ G_K^{-1}(y(s) - \hat{y}(s)) \right]$$

und falls $G_K$ invertierbar $\qquad$ abgeschätzt werden. Mit $\hat{f}_S$ bzw. $\hat{f}_K$ liegt dann zusätzlich eine Fehlergrößenschätzung für den Sensor- bzw. Komponentenfehler vor.

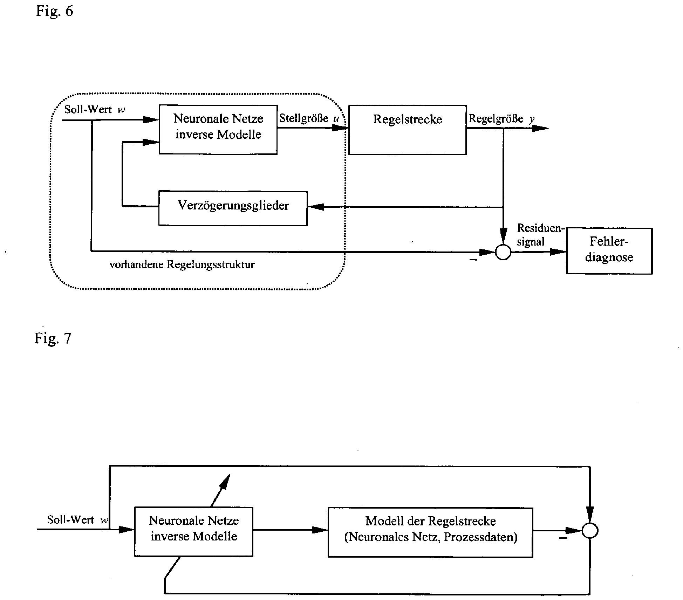

In einer weiteren Ausführungsform gemäß Figur 6 wird das für die Modellfolgeregelung genutzte inverse Modell mittels eines Neuronalen Netzes modelliert. Neuronale Netze (NN) werden nicht nur zur Modellierung technischer Prozesse, welche analytisch schwer zu beschreiben sind, sondern auch zunehmend in der Modellfolgeregelung als Regler in Form eines inversen Modells verwendet. Wie in Figur 6 beschrieben dient der Einsatz der Neuronalen Netze dazu, das inverse Modell der Regelstrecke nachzubilden und ferner die Stellgröße so zu generieren, dass die Regelgröße der Führungsgröße (dem Soll-Wert) schnellstmöglich folgt.

Für eine erfolgreiche Modellierung des Neuronalen Netzes d. h. für die Bildung des inversen Modells für die Modellfolgeregelung mittels eines Neuronalen Netzes ist das Training/Lernen des Neuronalen Netzes notwendig. Zu diesem Zweck wird in der Praxis die in Figur 7 gezeigte Trainingsstruktur/-prozedur verwendet. Zunächst wird die Regelstrecke mit Hilfe eines Neuronalen Netzes nachgebildet. Sei angenommen, dass dieses NN, gekennzeichnet durch $NN_1$, durch

$$\hat{y}(k+1) = NN_1\left(y(k), y(k-1), \cdots, y(k-l_{R1}+1), u(k), u(k-1), \cdots, u(k-l_{S1}+1)\right)$$

mit $l_{R1}+l_{S1}$ Eingängen beschrieben wird, wird das Training/Lernen des Netzes dann beendet, wenn $\hat{y}(k)-y(k)$ ausreichend klein wird. Das $NN_1$ wird nun in die in Figur 7 dargestellte Struktur als Modell der Regelstrecke eingesetzt. Mit

$$u(k) = NN_2\left(y(k), y(k-1), \cdots, y(k-l_{R2}+1), u(k-1), u(k-1), \cdots, u(k-l_{S1}+1), w\right)$$

als weiteres NN mit $l_{R2}+l_{S1}$ Eingängen zur Beschreibung des inversen Modells, wird $NN_2$ so lange trainiert, bis die Differenz zwischen der Ausgangsgröße des $NN_1$ und dem Soll-Wert w ausreichend klein ist.

Für die Anwendung zur Fehlerdiagnose wird die Regelungsstruktur wie folgt genutzt. Unter der Voraussetzung, dass das $NN_2$ ausreichend und mögliche Veränderungen in der Umgebung der Regelstrecke während des Trainings mit berücksichtigt trainiert wurde, wird gewährleistet, dass

$$|w(k) - y(k)| < \gamma \text{ bzw. } y(k) \to w(k)$$

Es liegt somit nahe, das Signal

$$y(k) - w(k)$$

als Residuensignal zu definieren. Es ist anzumerken, dass das hier gebildete Residuensignal $y(k)-w(k)$ im Gegensatz zu den oben beschriebenen Konzepten aus einer "closed-loop"-Struktur generiert wird.

Um den Einfluss der möglichen Fehler auf das Residuensignal zu verdeutlichen, wird der Einfachheit halber angenommen, dass sich Sensor- und Aktuatorfehler durch

$$y(k) + f_S, u(k) + f_A$$

modellieren lassen und ferner im fehlerfreien Fall

$$w(k+1) = y(k+1) = f\left(y(k), y(k-1), \cdots, y(k-l_{R1}+1), u(k), u(k-1), \cdots, u(k-l_{S1}+1)\right)$$

gilt. $f(\cdot)$ kennzeichnet eine nichtlineare Funktion, die die Regelstrecke beschreibt und sich durch das $NN_1$ ausreichend gut nachbilden lässt. Es gilt dann im Allgemeinen

$$y(k) - w(s) = f_s + f\left(y(k-1), \cdots, y(k-l_{R1}), u(k-1) + f_A, \cdots, u(k-l_{S1}) + f_A\right) \\ - f\left(y(k-1), \cdots, y(k-l_{R1}), u(k-1), \cdots, u(k-l_{S1})\right)$$

$$u(k) = NN_2\left(y(k) + f_s, \cdots, y(k-l_{R1}+1) + f_s, u(k), \cdots, u(k-l_{S1}+1), w\right)$$

Als ein Beispiel kann man die Wirkung eines Sensorfehlers aus der obigen Darstellung durch

$$y(k) - w(s) = f_s + f\left(y(k-1), \cdots, y(k-l_{R1}), u(k-1), \cdots, u(k-l_{S1})\right) \\ - f\left(y(k-1), \cdots, y(k-l_{R1}), u(k-1), \cdots, u(k-l_{S1})\right)$$

$$u(k) = NN_2\left(y(k) + f_s, \cdots, y(k-l_{R1}+1) + f_s, u(k), \cdots, u(k-l_{S1}+1), w\right)$$

$$y(k) - w(k) \approx f_s + \frac{\partial f}{\partial u}\frac{\partial NN_2}{\partial f_s} f_s, u = \begin{bmatrix} u(k-1) \\ \vdots \\ u(k-l_{S1}) \end{bmatrix}$$

beschreiben. Basierend auf diesem Fehlermodell kann man dann den Schwellwert parametrisieren, einstellen und die möglichen Fehler lokalisieren und unter gewissen Bedingungen identifizieren.

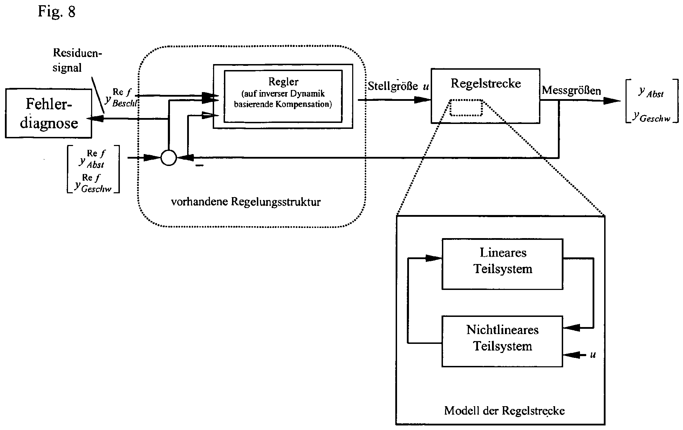

Figur 8 zeigt das erfindungsgemäße Fehlerdiagnoseverfahren in einer Anwendung auf eine nichtlineare Modellfolgeregelstruktur.

Basierend auf dem Konzept der Systemlinearisierung durch (Zustands-) Rückkopplung wird das Schema der Modellfolgeregelung erfolgreich zur Regelung nichtlinearer Systeme eingesetzt. Vor allem im Bereich der Regelung mechatronischer Systeme wird damit der Stand der Technik markiert. Zur Erläuterung des Arbeitsprinzips der Regler wird das in Abb. 7 vereinfacht dargestellte Modellfolgeregelungssystem herangezogen.

Es wird angenommen, dass sich die Regelstrecke durch

$$\begin{bmatrix} \dot{y}_{Abst} \\ \dot{y}_{Geschw} \end{bmatrix} = \begin{bmatrix} y_{Geschw} \\ f(y_{Abst}, y_{Geschw}) + b(y_{Abst}, y_{Geschw})u \end{bmatrix}$$

mit $y_{Abst}, y_{Geschw}$ als Messungen des Abstands und der Geschwindigkeit darstellen lässt. Eine Modellfolgeregelung erfolgt dann durch die Einstellung des Reglers der Form

$$u = \frac{1}{b(y_{Abst}, y_{Geschw})}\left(-f(y_{Abst}, y_{Geschw}) + \left(y_{Beschl}^d + K_1\left(y_{Abst}^d - y_{Abst}\right) + K_2\left(y_{Geschw}^d - y_{Geschw}\right)\right)\right)$$

$$y^d_{Abst}, y^d_{Geschw}, y^d_{Beschl}$$

wobei $y^d_{Abst}, y^d_{Geschw}, y^d_{Beschl}$ den Soll-Abstand, die Soll-Geschwindigkeit sowie die Soll-Beschleunigung bezeichnen. Für die Dynamik des geschlossenen Regelkreises gilt dann

$$\dot{y}_{Geschw} - y^d_{Beschl} - K_1\left(y^d_{Abst} - y_{Abst}\right) - K_2\left(y^d_{Geschw} - y_{Geschw}\right) = 0$$

Damit ist ersichtlich, dass sich durch eine geeignete Einstellung der beiden Parameter

$$y^d_{Abst} - y_{Abst}, y^d_{Geschw} - y_{Geschw}$$

zwei Residuensignale bilden.

Im Allgemeinen lässt sich ein nichtlineares, dynamisches System unter bestimmten Bedingungen in ein lineares und ein nichtlineares Teilsystem transformieren. Das nichtlineare Teilsystem wird als Zero-Dynamik des Systems bezeichnet. Die Aufgabe des Reglers besteht nun im Wesentlichen darin, mit Hilfe eines inversen Modells den nichtlinearen Anteil zu kompensieren und den geschlossenen Regelkreis durch geeignete Soll-Werte zu erregen.

Es werden die möglichen Sensor- und Aktuatorfehler durch

$$y_{Abst} + f_{Abst}, y_{Geschw} + f_{Geschw}, u + f_u$$

modelliert. Es gilt dann

$$\dot{y}_{Geschw} - \frac{b\left(y_{Abst}, y_{Geschw}\right)}{b\left(y_{Abst} + f_{Abst}, y_{Geschw} + f_{Geschw}\right)} y^d_{Beschl} =$$

$$\frac{b\left(y_{Abst}, y_{Geschw}\right)}{b\left(y_{Abst} + f_{Abst}, y_{Geschw} + f_{Geschw}\right)}\left(K_1\left(y^d_{Abst} - y_{Abst} - f_{Abst}\right) + K_2\left(y^d_{Geschw} - y_{Geschw} - f_{Geschw}\right)\right)$$

$$+ b\left(y_{Abst}, y_{Geschw}\right) f_u + f\left(y_{Abst}, y_{Geschw}\right) - \frac{b\left(y_{Abst}, y_{Geschw}\right) f\left(y_{Abst} + f_{Abst}, y_{Geschw} + f_{Geschw}\right)}{b\left(y_{Abst} + f_{Abst}, y_{Geschw} + f_{Geschw}\right)}$$

, woraus man den Einfluss der einzelnen Fehler berechnen und somit die Grundlage für eine Residuenauswertung zwecks Fehlerdetektion und -lokalisierung schaffen kann.

Es ist anzumerken, dass die hier beschriebene Residuengenerierung in einer "closed-loop"-Struktur realisiert wird.

**Bezugszeichenliste**

| | |
|---|---|
| w | Führungsgröße (Soll-Wert) |
| $\hat{w}$ | Schätzwert der Führungsgröße |
| y | Regelgröße (Ist-Wert) |
| $\hat{y}$ | Schätzwert der Regelgröße |
| u | Stellgröße |
| $G_S(s)$ | Streckenmodell |
| $G_S^{-1}(s)$ | inverses Streckenmodell |
| K | Übergangsfunktion Regler für Soll-Wertkorrektur |
| $G_K$ | Fehlerübertragungsfunktion der Aktuator- oder Komponentenfehler (bezogen auf Regelgröße) |

| $f_S(s)$ | Sensorfehler |
|---|---|
| $f_K(s)$ | Aktuator- oder Komponentenfehler |
| $\hat{f}_S$ | Fehlergrößenschätzung Sensorfehler |
| $\hat{f}_K$ | Fehlergrößenschätzung Aktuator- oder Komponentenfehler |
| $\vartheta$ | Parametervektor des Modells |
| $\Psi$ | Abbildung (allg. math.) |
| $\Xi$ | Abbildung (allg. math.) |
| $I_{S1}$ | Anzahl gespeicherter Abtastschritte der Stellgröße (NN1 & NN2) |
| $I_{R1}$ | Anzahl gespeicherter Abtastschritte der Regelgröße (NN1) |
| $I_{R2}$ | Anzahl gespeicherter Abtastschritte der Regelgröße (NN2) |
| NN | Neuronales Netz (Abk.) |
| $SCH_{dw}$ | Schwellwert aus Abschätzung Störeinfluss auf Residuum |
| $SCH_{ds}$ | Schwellwert aus Abschätzung Störeinfluss auf Residuum |
| $SCH_{dy}$ | Schwellwert aus Abschätzung Störeinfluss auf Residuum |

## Patentansprüche

1. Verfahren zur Fehlerdiagnose eines geregelten mechatronischen Systems, das mindestens einen Sensor, einen Aktuator und eine Komponente aufweist, dessen Regelungsstrukturen wenigstens eine Modellfolgeregelung aufweisen, wobei zur Fehlerdiagnose die in das Regelungssystem eingebettete Modellfolgeregelung betrachtet wird, wobei die Regelstrecke von einer Stellgröße (u) geregelt wird, wobei der Ist-Wert der Regelgröße (y) am Ausgang der Regelstrecke gemessen wird, wobei eine Schätzung ($\hat{w}$) einer Führungsgröße (w) aus dem in der Modellfolgeregelung enthaltenen Modell ($G_S$) der Regelstrecke und der Stellgröße (u) abgeleitet wird, wobei die Stellgröße (u) basierend auf der Führungsgröße (w), der Schätzung ($\hat{w}$) der Führungsgröße (w) und dem Ist-Wert der Regelgröße (y) die Ausgangsgröße eines inversen Modells ($G_S^-$) der Regelstrecke ist, wobei die Abweichung des Ist-Wertes der Regelgröße (y) durch eine Korrektur an der Führungsgröße (w) über einen Regler mit einer Übergangsfunktion (K(s)), angetrieben von einem Residuum ($\hat{w}$-y) der Schätzung ($\hat{w}$) der Führungsgröße (w) mit dem Ist-Wert der Regelgröße (y), ausgeglichen wird, wobei die Fehlerdiagnose in Abhängigkeit der Schätzung ($\hat{w}$) der Führungsgröße (w) und in Abhängigkeit des Ist-Wertes der Regelgröße (y) erfolgt, **dadurch gekennzeichnet, dass** der Fehler durch den Einsatz von Nachfiltern für das Residuum ($\hat{w}(s)$-$y(s)$) lokalisiert wird, wobei die Nachfilter Übertragungsfunktion $R_1(s)$ beziehungsweise $R_2(s)$ so zu wählen ist, dass

$$R_1(s)(\hat{w}(s) - y(s)) \approx \frac{R_1(s)}{1 + K(s)}\left[\Delta G_S(s)u(s) + f_S(s)\right]$$

ist, wobei mit der Übertragungsfunktion $\Delta G_S(s)$ Modellungenauigkeiten bezeichnet werden und wobei $f_S(s)$ ein Sensorfehler ist, und dass auch

$$R_2(s)(\hat{w}(s) - y(s)) \approx \frac{R_2(s)}{1 + K(s)}\left[\Delta G_S(s)u(s) + G_K(s)f_K(s)\right]$$

ist, wobei $G_K(s)$ die Fehlerübertragungsfunktion eines Aktuator- oder Komponentenfehlers ist und wobei $f_K(s)$ ein Aktuator- oder Komponentenfehler ist,
wobei ein adaptiver Schwellwert ($SCH_{dw}$) basierend auf den Übertragungsfunktionen als Obergrenze des maximalen Einflusses der Modellungenauigkeit ($\Delta G_S(s)$) auf das Residuum ($\hat{w}(s)$-$y(s)$) gebildet wird, wobei auf einen Sensorfehler $f_S(s)$ geschlossen wird, wenn

$$\left|R_1(s)(\hat{w}(s) - y(s))\right| > Sch_{dw}$$

und
wobei auf einen Aktuator- oder Komponentenfehler $f_K(s)$ geschlossen wird, wenn

$$\left|R_2(s)(\hat{w}(s) - y(s))\right| > Sch_{dw}.$$

2. Computerprogramm,
   umfassend Befehle, die bei der Ausführung des Programms durch einen Computer diesen veranlassen, das Verfahren nach Anspruch 1 auszuführen.

3. Steuer- und/oder Regeleinrichtung zum Betreiben einer Brennkraftmaschine, umfassend Mittel zur Ausführung des Verfahrens nach Anspruch 1.

**Claims**

1. A method for diagnosing errors of a controlled mechatronic system comprising at least a sensor, an actuator and a component, the control structures of which have at least one model slave control, wherein the model slave control embedded in the control system is considered for the error diagnosis, wherein the controlled system is controlled by a manipulated variable (u), wherein the actual value of the controlled variable (y) at the output of the controlled system is measured, wherein an estimate ($\hat{w}$) of a reference variable (w) is derived from the model ($G_S$) of the controlled system and the manipulated variable (u) contained in the model slave control, wherein the manipulated variable (u) based on the reference variable (w), the estimate ($\hat{w}$) of the reference variable (w) and the actual value of the controlled variable (y) is the output variable of an inverse model ($G_S^-$) of the controlled system, wherein the deviation of the actual value of the controlled variable (y) is compensated by a correction of the reference variable (w) by way of a controller with a transfer function (K(s)) driven by a residual ($\hat{w}$-y) of the estimate ($\hat{w}$) of the reference variable (w) and the actual value of the controlled variable (y), wherein the error diagnosis is implemented as a function of the estimate ($\hat{w}$) of the reference variable (w) and as a function of the actual value of the controlled variable (y), **characterized in that**
   the error is localized by the use of post-filtering for the residual ($\hat{w}$(s)-y(s)),
   wherein the post-filter transfer function $R_1(s)$ or $R_2(s)$ should be chosen in such a way that

$$R_1(s)\big(\widehat{w}(s) - y(s)\big) \approx \frac{R_1(s)}{1+K(s)}\left[\Delta G_S(s)u(s) + f_S(s)\right],$$

where the transfer function $\Delta G_S(s)$ denotes model inaccuracies and where $f_S(s)$ is a sensor error, and in such a way that the following also applies:

$$R_2(s)\big(\widehat{w}(s) - y(s)\big) \approx \frac{R_2(s)}{1+K(s)}\left[\Delta G_S(s)u(s) + G_K(s)f_K(s)\right],$$

where $G_K(s)$ is the error transfer function of an actuator or component error and where $f_K(s)$ is an actuator or component error,
wherein an adaptive threshold ($SCH_{dw}$) is formed on the basis of the transfer functions as an upper limit of the maximum influence of the model inaccuracy ($\Delta G_S(s)$) on the residual ($\hat{w}$(s)-y(s)),
wherein a sensor error $f_S(s)$ is deduced if

$$\left|R_1(s)\big(\widehat{w}(s) - y(s)\big)\right| > Sch_{dw},$$

and wherein an actuator or component error $f_K(s)$ is deduced if

$$\left|R_2(s)\big(\widehat{w}(s) - y(s)\big)\right| > Sch_{dw}.$$

2. Computer program,
   comprising commands that cause a computer to carry out the method according to Claim 1 when said computer carries out the program.

3. Open-loop and/or closed-loop control device for operating an internal combustion engine, comprising means for carrying out the method according to Claim 1.

**Revendications**

1. Procédé de diagnostic de défaut d'un système mécatronique régulé, lequel possède au moins un capteur, un actionneur et un composant, dont les structures de régulation présentent au moins une régulation en cascade de modèle, la régulation en cascade de modèle intégrée dans le système de régulation étant prise en compte pour le diagnostic de défaut, le système régulé étant régulé par une grandeur de commande (u), la valeur réelle de la grandeur régulée (y) à la sortie du système régulé étant mesurée, une estimation ($\hat{W}$) d'une grandeur de référence (w) étant dérivée à partir du modèle ($G_s$) du système régulé contenu dans la régulation en cascade de modèle et de la grandeur de commande (u), la grandeur de commande (u) basée sur la grandeur de référence (w), l'estimation ($\hat{W}$) de la grandeur de référence (w) et la valeur réelle de la grandeur régulée (y) étant la grandeur de sortie d'un modèle inverse ($G_s^-$) du système régulé, l'écart de la valeur réelle de la grandeur régulée (y) étant compensé par une correction au niveau de la grandeur de référence (w) par le biais d'un régulateur avec une réponse indicielle (K(s)), piloté par un résidu ($\hat{W}$-y) de l'estimation ($\hat{W}$) de la grandeur de référence (w) avec la valeur réelle de la grandeur régulée (y), le diagnostic de défaut étant réalisé en fonction de l'estimation ($\hat{W}$) de la grandeur de référence (w) et en fonction de la valeur réelle de la grandeur régulée (y), **caractérisé en ce que**
le défaut est localisé en utilisant des filtres secondaires pour le résidu ($\hat{W}$(5)-y(5)),
les filtres secondaires de la fonction de transfert $R_1(s)$ ou $R_2(s)$ étant à choisir de telle sorte que

$$R_1(s)(\hat{w}(s) - y(s)) \approx \frac{R_1(s)}{1 + K(s)}[\Delta G_s(s)u(s) + f_s(s)],$$

la fonction de transfert $\Delta G_s(s)$ désignant des imprécisions du modèle et $f_s(s)$ étant un défaut de capteur, et aussi de telle sorte que

$$R_2(s)(\hat{w}(s) - y(s)) \approx \frac{R_2(s)}{1 + K(s)}[\Delta G_s(s)u(s) + G_K(s)f_K(s)],$$

$G_K(s)$ étant la fonction de transfert de défaut d'un défaut d'actionneur ou de composant et $f_K(s)$ étant un défaut d'actionneur ou de composant,
une valeur de seuil adaptative (SCHdw) étant établie en se basant sur les fonctions de transfert en tant que limite haute de l'influence maximale de l'imprécision du modèle **($\Delta G_s(s)$)** sur le résidu **($\hat{W}(s)$** - y(s)),
un défaut de capteur $f_s(s)$ étant déduit lorsque

$$|R_1(s)(\hat{w}(s) - y(s))| > \text{Sch}_{dw}$$

et
un défaut d'actionneur ou de composant $f_K(s)$ étant déduit lorsque

$$|R_2(s)(\hat{w}(s) - y(s))| > \text{Sch}_{dw}.$$

2. Programme informatique, comprenant des instructions qui, lors de l'exécution du programme par un ordinateur, amènent celui-ci à mettre en oeuvre le procédé selon la revendication 1.

3. Dispositif de commande et/ou de régulation destiné à faire fonctionner un moteur à combustion interne, comprenant des moyens pour mettre en oeuvre le procédé selon la revendication 1.

Fig. 1

Eingangsgröße *u* → | System | → Messung/Ausgangsgröße *y*

| Systemmodell | Softwareredundanz *ŷ*

Residuensignal

Fig. 2

Eingangsgröße *u* → | System | → Messung/Ausgangsgröße *y*

| Systemmodell | *ŷ*

Beobachter

| Residuen-auswertung | → | Entscheidungs-logik | → Fehlerinformation

Fig. 3

Soll-Wert *w* → | Inverses Modell | → Stellgröße *u* → | Regelstrecke | → Regelgröße *y*

| Adaptiver Algorithmus |

| Referenz-modell |

Modellfolgeregler

Fig. 4

Soll-Wert *w*            Stellgröße *u*        Regelgröße *y*

| Inverses Modell |

| Regelstrecke |

(Beobachter)

$\hat{w}$    −

$G_s(s)$

| *K* |

| Modellgestützte Fehlerdiagnose |

Residuensignale

−

Fig. 5

Soll-Wert *w*      Stellgröße *u*       Regelgröße *y*

| Kopien des inversen Modells |

| Regelstrecke |

| Online-Identifikation des RS-Moedells (adaptiver Beobachter) |

$\hat{y}$    Residuensignal

−

| Fehler-diagnose |

| Identifikation des inversen Modells |

| Kopien des RS-Modells |

$\hat{w}$

−

vorhandene Regelungsstruktur

Fig. 6

Fig. 7

Fig. 8

Residuensignal

Fehlerdiagnose

$y_{Besch}^{Re\,f}$

$\begin{bmatrix} y_{Abst}^{Re\,f} \\ y_{Geschw}^{Re\,f} \end{bmatrix}$

Regler
(auf inverser Dynamik
basierende Kompensation)

Stellgröße $u$

Regelstrecke

Messgrößen

$\begin{bmatrix} y_{Abst} \\ y_{Geschw} \end{bmatrix}$

vorhandene Regelungsstruktur

Lineares
Teilsystem

Nichtlineares
Teilsystem

$u$

Modell der Regelstrecke

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19750191 A1

- DE 10021639 C1

**In der Beschreibung aufgeführte Nicht-Patentliteratur**

- **D. U. CAMPOS-DELGADO ; S. M. MARTINEZ ; K. ZHOU.** Integrated fault tolerant scheme with disturbance feedforward. *Proceedings of the 2004 American Control Conference,* 2004, vol. 2, 1799-1804

- **K. ZHOU.** A natural approach to high performance robust control: another look at Youla parameterization. *SICE 2004 Annual Conference,* 2004, vol. 1, 869-874